# EUROPÄISCHE PATENTSCHRIFT

(11) **EP 1 819 481 B1**
(45) Veröffentlichungstag und Bekanntmachung des Hinweises auf die Patenterteilung: **13.05.2015**
(21) Anmeldenummer: 05850045.5
(22) Anmeldetag: 01.12.2005
(51) Int. Cl.: B24B 23/02

(54) **VORRICHTUNG ZUM TRENNEN UND SCHLEIFEN, SPANNVORRICHTUNG UND ROTIERENDES WERKZEUG MIT VIBRATIONSDÄMPFUNG**
DEVICE FOR CUTTING AND GRINDING, CHUCKING DEVICE AND ROTATING TOOL WITH VIBRATION DAMPING
DISPOSITIF POUR OPERATIONS DE SEPARATION ET DE POLISSAGE, DISPOSITIF DE FIXATION ET OUTIL ROTATIF, A AMORTISSEMENT DE VIBRATIONS

(30) Priorität: 01.12.2004 DE 202004018583 U; 14.07.2005 DE 202005011276 U
(43) Veröffentlichungstag der Anmeldung: 22.08.2007
(73) Patentinhaber: Rhodius Schleifwerkzeuge GmbH & Co. KG, 56659 Burgbrohl (DE)
(72) Erfinder: DEGEN, Peter, 56659 Burgbrohl (DE)
(74) Vertreter: Gritschneder, Martin
(86) Internationale Anmeldenummer: PCT/EP2005/056365
(87) Internationale Veröffentlichungsnummer: WO 2006/058898

(56) Entgegenhaltungen:
- WO-A-00/27590
- DE-A1- 2 907 923
- DATABASE WPI Section PQ, Week 198110 Derwent Publications Ltd., London, GB; Class P63, AN 1981-C1098D XP002381864 & SU 745 674 A (LENINGRAD FORESTRY ACAD) 17. Juli 1980 (1980-07-17)

## Beschreibung

### Technisches Umfeld

Die Erfindung betrifft eine Vorrichtung zum Trennen und Schleifen, z.B. einen Winkelschleifer, mit einer Antriebsspindel, auf der ein rotierendes Werkzeug, wie eine Schleif-, Schrupp- oder Trennscheibe, befestigt ist. Die Befestigung erfolgt mittels zweier Spannelemente, im Allgemeinen einem Spannflansch und einer Spannmutter. Der Spannflansch ist einteilig mit der Antriebsspindel ausgebildet oder sitzt lose aber drehfest auf ihr. Die Spannmutter ist auf das Ende der Antriebsspindel aufgeschraubt. Das Werkzeug wird zwischen dem Spannflansch und der Spannmutter festgespannt. Die Spannelemente können auch ein unterer und ein oberer Spannflansch sein, die mittels einer Mutter gegeneinander gespannt werden.

Die Erfindung betrifft außerdem eine Spannvorrichtung und ein rotierendes Werkzeug, wie eine Schleif-, Trenn- oder Schruppscheibe.

Bei der Benutzung von Winkelschleifern ohne vibrationsdämpfende Elemente entstehen Vibrationen, die sich über die Haltegriffe, im Allgemeinen ein Haupt- und ein Zusatzhandgriff, auf die Arme des Benutzers übertragen. Beim längeren Arbeiten mit Winkelschleifern kann es daher zu Gesundheitsschäden wie Taubheitsgefühlen im Unterarm kommen. Bei Winkelschleifern enthalten der Haupt- und Zusatzhandgriff daher bisweilen Vibrationsdämpfungen.

Aus DE-OS 26 32 652 ist eine Schleifscheibe aus mindestens zwei miteinander verbundenen Schleiftellern bekannt, die durch eine dazwischen angeordnete Polymerschicht miteinander verbunden sind. Dadurch sollen Schwingungen reduziert werden.

Aus DE-GM 76 28 082 ist es bekannt, einen Scheibenring aus elastischem Material zwischen die Schleifscheibe und jeden der beiden Spannflansche einzufügen. Die Schleifscheibe sitzt mit Spielpassung auf der Antriebsspindel. Es werden dadurch ebenfalls Vibrationen vermindert. Eine ähnliche Anordnung ist auch aus dem US-Patent 3,566,547 bekannt.

WO 00/27590 beschreibt eine Spanneinrichtung für Schleifscheiben, wobei zwischen dem Spannflansch oder der Spannmutter und der Schleifscheibe ein metallischer Zwischenring angeordnet ist, der mit einer Dämpfungsschicht aus elastischem Material versehen ist. Die Dämpfungsschicht erstreckt sich sowohl in radialer als auch in axialer Richtung.

Aus JP 95 118 376 ist eine vibrationsgedämpfte Schleifscheibe bekannt, die mittels einer Anordnung aus einem weichen und einem harten Dämpfungselement, die seitlich an der Schleifscheibe anliegen, mit dem Schaft verbunden ist.

Aus JP 56 163 882 ist ein Schleifstein bekannt, der mittels Hülsenflanschen auf einem zentralen Dämpfungsrad aus elastischem Material befestigt ist, das wiederum mittels Spannflanschen auf einem Dorn befestigt ist, der auf der Antriebsspindel sitzt.

### Offenbarung der Erfindung

### Technisches Problem

Der Erfindung liegt die Aufgabe zugrunde, die gesundheitsschädlichen Vibrationen in den Händen des Benutzers einer handgeführten Trenn- oder Schleifvorrichtung in einfacher Weise möglichst weitgehend zu reduzieren.

### Technische Lösung

Erfindungsgemäß wird diese Aufgabe durch die Vorrichtungen mit den Merkmalen gemäß den Ansprüchen 1 und 5 gelöst.

Die Schicht ist auf beiden Seiten des rotierenden Werkzeugs sowie innerhalb der Befestigungsbohrung vorgesehen, mit der das Werkzeug auf der Spindel festgespannt wird. Das Schleifwerkzeug hat dadurch keinen unmittelbaren Kontakt mit den Spannelementen, d.h. der Spindel, dem Spannflansch und der Spannmutter, und alle Kontakt- oder Spannflächen sind mit dem elastischen Material versehen. Die Übertragungen der Vibration von dem Schleifwerkzeug auf die Antriebsspindel und damit die Antriebseinheit wird dadurch bereits am Anfang des Übertragungsweges reduziert, so dass die Vibrationen bereits stark gedämpft werden, bevor sie auf die Antriebseinheit übertragen werden.

Die Schicht aus elastischem Material ist dabei jeweils auf beiden der aneinander liegenden Spannflächen der Spannelemente vorgesehen.

Die Schicht aus elastischem Material ist eine Beschichtung auf den Spannelementen.

Die Spannelemente (Spannflansche und Spannmutter) haben eine zentrale Bohrung, mit der sie auf der Antriebsspindel sitzen. Diese Bohrung hat auf der Seite der Spannflächen üblicherweise einen Kragen, auf dem das rotierende Werkzeug mit seiner Naben- oder Befestigungsbohrung sitzt. Die zylindrische Außenseite des Kragens tragen ebenfalls die Beschichtung aus elastischem Material.

Die elastische Schicht oder Beschichtung besteht vorzugsweise aus einem Polyurethan-Elastomer, das sich besonders durch hohe Verschleiß- und Abriebfestigkeit, Beständigkeit gegen Ozon, UV-Strahlung, mineralische Öle und Fette auszeichnet, z.B. Vulkollan®. Der eingesetzte Formwerkstoff kann dabei die folgenden mechanisch-physikalischen Kennzahlen haben:

**Tabelle 1**

| | |
|---|---|
| Härte [Shore A] DIN 53505 | 80 ± 5 |
| Dichte [g/cm³] DIN 54379 | 1,07 |
| Reißfestigkeit [MPa] DIN 53504 | 21 |
| Reißdehnung (ermittelt am S2-Stab) [%] DIN 53504 | 750 |
| Rückprallelastizität [%] DIN 53512 | 70 |
| Weiterreißwiderstand [N/mm] DIN 53515 | 11 |
| Spannung bei 100 % Dehnung [MPa] DIN 53504 | 2,5 |
| Spannung bei 300 % Dehnung [MPa] DIN 53504 | 4,1 |
| Druckverformungsrest (24 h bei 70° C) [%] DIN 53517 | 45 |
| Abriebverlust [mm³] DIN 53516 | 28 |

Das Material wird nicht als Halbzeug, sondern als Formwerkstoff eingesetzt. Es wird eine Negativform erstellt, die mit dem Formwerkstoff gefüllt wird. Während der Aushärtung erfolgt die Verbindung mit dem Spannflansch oder der Spannmutter unter Zuhilfenahme eines Haftvermittlers.

Bei der Erfindung sind die Spannflächen des Werkzeuges nicht mit einer Beschichtung versehen und sind nur die Spannflächen des Spannflansches und der Spannmutter einschließlich des Umfangs des jeweiligen Kragens mit einer Beschichtung versehen. Bei dieser Ausführungsform können Schleifscheiben mit den üblichen Abmessungen, insbesondere dem üblichen Durchmesser der Nabenbohrung von 22,23 mm verwendet werden. Der Durchmesser des Kragens des Spannflansches und der Spannmutter ohne Beschichtung wird dabei soweit reduziert, dass mit der Beschichtung dann der übliche Durchmesser von 22,13 mm erreicht wird. Die Kragen haben dazu einen ursprünglichen Durchmesser von z.B. 17,2 mm, und die Beschichtung hat eine Stärke von 2,5 mm. Eine Spannvorrichtung mit zwei in dieser Weise ausgebildeten Spannelementen ist ebenfalls Gegenstand der Erfindung.

Die Beschichtung der Spannflächen des Spannflansches und der Spannmutter hat eine Stärke zwischen 0,5 bis 5 mm, vorzugsweise 1,5 bis 2,5 mm. Die Beschichtung, der Kragen des Spannflansches und der Spannmutter hat vorzugsweise eine Stärke von etwa 2,5 mm.

Bei allen erwähnten Ausgestaltungen der Erfindung sind somit der Spannflansch und die Spannmutter so ausgebildet, dass eine Standardschleifscheibe mit üblichen Abmessungen eingespannt werden kann.

Durch die elastische Beschichtung wird bei allen oben erwähnten A usgestaltungen der Erfindung eine deutliche Dämpfung der Vibrationen erzielt. Eine weitere Reduzierung der Vibrationen ist dadurch möglich, dass die Beschichtung axial gerichtete Erhebungen aufweist oder die Form derartiger Erhebungen hat. Im letzteren Fall besteht die Beschichtung nur aus den Erhebungen. Die Erhebungen stehen dann nicht von einer flächigen Beschichtung vor, sondern sind als einzelne, diskrete Flächenstücke auf einem oder beiden Spannelementen, dem Werkzeug oder einer dazwischen eingelegten Scheibe aufgebracht.

Durch die Erhebungen wird die Berührungsfläche zwischen den Spannelementen und dem Werkzeug verringert. Vorzugsweise beträgt die Verringerung mindestens 50 Prozent.

In einer bevorzugten Ausführungsform sind die Erhebungen als radiale Auflagerippen oder -stege ausgebildet, wobei mindestens drei Rippen oder Stege vorhanden sind. Wenn in der Spannmutter vier Spannlöcher vorhanden sind, so sind zweckmäßig auch vier Auflagerippen vorhanden. Die Rippen oder Stege sind in gleichem Winkelabstand auf der Spannfläche angeordnet und haben eine Breite von mindestens 1 mm und vorzugsweise zwischen 1,5 und 5 mm. Wenn die Erhebungen eine andere Form haben, so ist ihre kleinste Querabmessung ebenfalls mindestens 1 mm.

Die Erhebungen haben vorzugsweise eine Höhe von 0,2 bis 2,5 mm. Wenn die Erhebungen Teil einer flächigen Beschichtung sind, so hat die Beschichtung vorzugsweise eine Stärke von etwa 1 bis 3 mm und stehen die Erhebungen etwa 0,5 mm von ihr ab. Sind die Erhebungen diskrete Beschichtungen aus elastischem Material, so haben sie vorzugsweise eine Höhe von etwa 1,5 bis 2,5 mm. Die Stege des Spannflansches sind im Allgemeinen höher als die Stege der Spannmutter. Z.B. haben die Stege des Spannflansches eine Höhe von 2,5 mm, während die Stege der Spannmutter nur eine Höhe von 1,5 mm haben.

Die Auflagerippen oder -stege können auch die Form eines oder mehrerer konzentrischer Kreise haben. In einer besonders bevorzugten Ausführungsform haben die Auflagerippen die Form von Spiralarmen. Jeder Spiralarm erstreckt sich dabei zweckmäßig über einen Winkelbereich von 360° geteilt durch die Anzahl der Spiralarme. Bei vier Spiralarmen erstreckt sich jeder Spiralarm über einen Winkelbereich von 90°, wobei er innerhalb eines Winkelbereichs von 45° von innen nach außen verläuft und dann in einem weiteren Winkelbereich von 45° auf einer Kreislinie am äußeren Rand des Spannflansches oder der Spannmutter. Die Auflagerippen können dabei eine Höhe von z.B. 2,5 mm und eine Breite von 2 mm haben. Bei dieser Höhe besteht die Beschichtung dann nur aus den Auflagerippen. Alternativ können die Auflagerippen mit einer geringeren Höhe von z.B. 0,5 mm von einer flächigen Beschichtung vorstehen, wobei die flächige Beschichtung die gesamte Spannfläche des Spannflansches oder der Spannmutter abdeckt und eine Stärke von z.B. 2 mm haben kann. Bei besonders breiten Stegen oder Rippen (z.B. 5 mm) werden die auf dem Rand liegenden Enden der spiralarmförmigen Rippen durch die Spannlöcher etwas gekürzt. Die Ausführungsform der Erfindung mit spiralarmförmigen Rippen oder Stegen hat infolge der stärkeren Belegung des Randes des Spannflansches eine höhere Verschleißfestigkeit und zugleich eine bessere Abstützung des Werkzeuges (Schleifscheibe) gegen Kippen und Taumeln.

Die Erhebungen der elastischen Beschichtung können grundsätzlich auf allen Bereichen der Spannflächen vorhanden sein. Im Allgemeinen genügt es jedoch, wenn sie auf den normal zur Achse der Antriebsspindel liegenden Flächen vorhanden sind.

Die Werkzeuge können eine gerade oder gekröpfte Form haben, und die Antriebseinheit kann einen Elektromotor, insbesondere Hochfrequenzmotor, Druckluftmotor oder benzingetriebenen Motor aufweisen.

Besonders vorteilhaft ist die Erfindung naturgemäß bei handgeführten Vorrichtungen zum Trennen und Schleifen.

### Kurze Beschreibung von Zeichnungen

Ausführungsbeispiele der Erfindung werden nachfolgend anhand der Zeichnung näher erläutert. Es zeigen:
Fig. 1 einen Winkelschleifer mit aufgespanntem Werkzeug;
Fig. 2 im Schnitt ein Werkzeug und die Spannelemente nach dem ersten Ausführungsbeispiel in einer auseinander gezogenen Darstellung;
Fig. 3 die Anordnung von Figur 2 im zusammengebauten Zustand;
Fig. 4 im Schnitt ein Werkzeug und Spannelemente nach dem zweiten Ausführungsbeispiel in einer auseinander gezogenen Darstellung;
Fig. 5 die Anordnung von Figur 4 im zusammengebauten Zustand;
Fig. 6 im Schnitt ein Werkzeug und Spannelemente nach dem dritten Ausführungsbeispiel;
Fig. 7 im Schnitt ein Werkzeug und die Spannelemente nach dem vierten Ausführungsbeispiel.
Fig. 8 in Draufsicht auf die Spannfläche die Spannmutter;
Fig. 9 im Schnitt die Spannmutter nach 9-9 von Fig. 8;
Fig. 10, 11 und 12 in einer perspektivischen Darstellung, in Draufsicht bzw. im Schnitt ein Ausführungsbeispiel mit isolierten spiralarmförmigen Rippen;
Fig. 13, 14 und 15 in einer perspektivischen Darstellung, in Draufsicht bzw. im Schnitt ein Ausführungsbeispiel mit spiralarmförmigen Rippen, die von einer flächigen Beschichtung abstehen;
Fig. 16 eine Spannmutter mit besonders breiten Rippen;
Fig. 17 und 18 in perspektivischen Ansichten von oben bzw. unten eine Spannmutter und
Fig. 19 und 20 in perspektivischen Ansichten von oben bzw. unten einen Spannflansch.

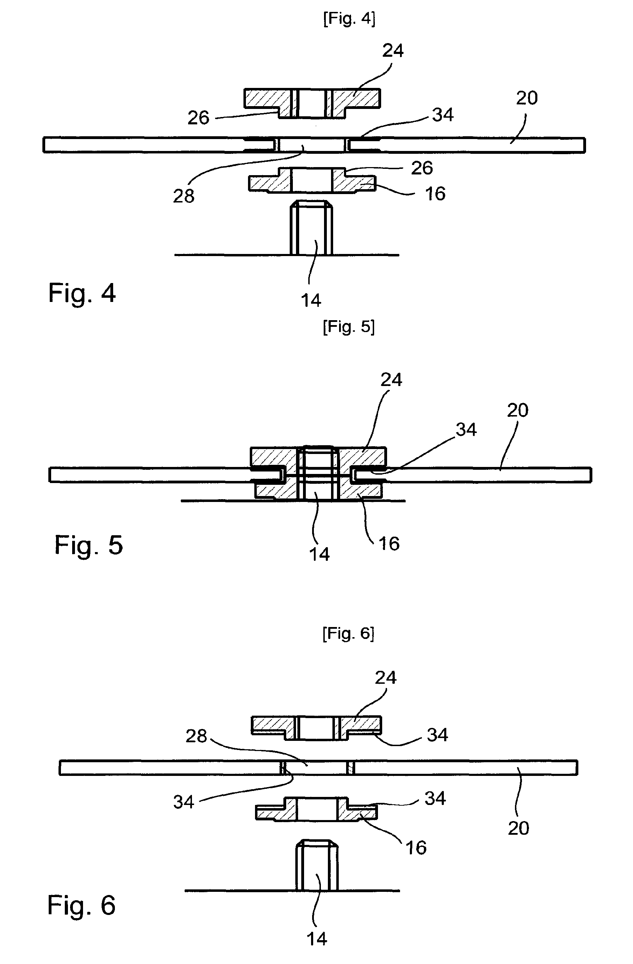

Die in den Figuren 4 bis 7 dargestellten Vorrichtungen sind keine Ausführungsformen der vorliegenden Erfindung, sondern dienen lediglich dem allgemeinen Verständnis.

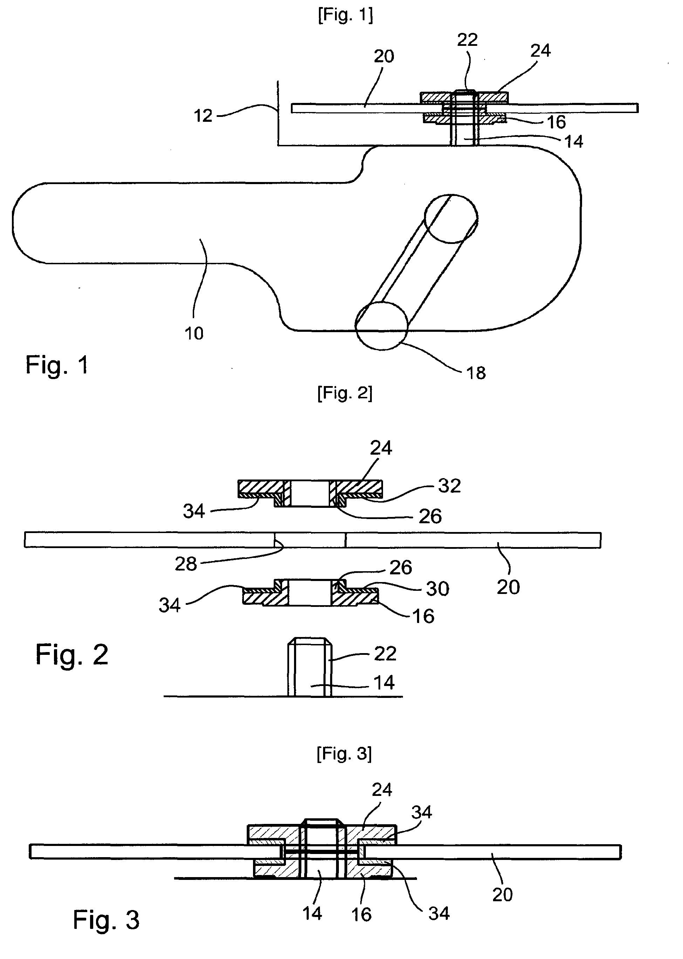

Der in Figur 1 schematisch dargestellte Winkelschleifer enthält eine Antriebseinheit 10, die über ein Winkelgetriebe eine Antriebsspindel 14 antreibt, und einen Handgriff 18. Die Antriebsspindel 14 weist einen Spannflansch 16 auf, der ein Lager für ein rotierendes Werkzeug 20 darstellt. Das äußere Ende der Antriebsspindel 14 ist mit einem Außengewinde 22 versehen, auf das eine Spannmutter 24 aufgedreht wird, so dass das Werkzeug 20 zwischen dem Spannflansch 16 und der Spannmutter 24 aufgespannt wird. Der Spannflansch 16 und die Spannmutter 24 haben einander zugewandte Spannflächen 30, 32 (Fig. 2), zwischen denen das Werkzeug 20 eingespannt wird. Der Spannflansch 16 kann einteilig mit der Antriebsspindel 14 ausgebildet sein oder ein getrenntes Bauteil sein, wobei er dann lösbar aber drehfest auf der Antriebsspindel 14 sitzt. Um den Rand seiner zentralen Öffnung bzw. um den Schaft der Antriebsspindel 14 herum hat der Spannflansch 16 einen Kragen 26, auf dem das Werkzeug 20 sitzt. Die Spannmutter 24 hat üblicherweise ebenfalls einen solchen Kragen 26. Der Spannflansch 16 und die Spannmutter 24 bilden zusammen die Spannelemente für das Werkzeug 20. Wie üblich ist das Werkzeug teilweise von einer Schutzhaube 12 abgedeckt, die sich um etwa 180° des Umfangs des Werkzeugs 20 erstreckt (Fig. 1).

Bei dem Werkzeug 20 handelt es sich um eine Schleifscheibe, einen Schleiftopf, eine Trennscheibe, eine Schruppscheibe oder dergleichen. Beim Arbeiten mit derartigen Werkzeugen entstehen Vibrationen, die von dem Werkzeug 20 auf die Antriebseinheit 10 und über deren Handgriffe 18 auf den Benutzer übertragen werden. Um die Übertragung der Vibrationen auf die Antriebseinheit zu reduzieren, ist zwischen dem Werkzeug 20 und dem Spannflansch 16 und der Spannmutter 24 eine Schicht aus elastischem Material vorgesehen. Es besteht dadurch kein direkter ungedämpfter Kontakt zwischen dem Werkzeug 20 und den Spannelementen 16, 24.

Die Figuren 2 und 3 zeigen ein erstes Ausführungsbeispiel, wobei die Spannfläche 30 des Spannflansches 16 und die Spannfläche 32 der Spannmutter 24 eine Beschichtung 34 tragen. Der Spannflansch 16 und die Spannmutter 24 haben einen Kragen 26, um dessen Umfang die Beschichtung 34 hochgezogen ist. Das Werkzeug 20 hat weder in der Befestigungsbohrung 28 noch in den die Befestigungsbohrung 28 umgebenden Bereichen eine Beschichtung.

Figur 3 zeigt das Werkzeug 20 eingespannt zwischen dem Spannflansch 16 und der Spannmutter 24. Infolge der Beschichtung 34 des Spannflansches 16 und der Spannmutter 24 besteht an keiner Stelle ein unmittelbarer Kontakt zwischen den Metallkörpem des Spannflansches 16 und der Spannmutter 24 mit dem Werkzeug 20, wodurch Vibrationen wirksam gedämpft werden. Da bei diesem Ausführungsbeispiel nur die Spannelemente 16, 24 die Beschichtung tragen, und der Außendurchmesser des Kragens 26 einschließlich der Beschichtung 34 den üblichen Durchmesser der Befestigungsbohrung von 22,23 mm hat, können Werkzeuge mit üblichen Abmessungen eingespannt werden.

Bei dem in den Figuren 4 und 5 gezeigten System trägt nur das Werkzeug 20 die Beschichtung 34. Der innere Rand der Befestigungsbohrung 28 und der sich daran anschließende Ringbereich auf beiden Seiten des Werkzeuges 20, dessen Durchmesser sich mit dem des Spannflansches 16 und der Spannmutter 24 deckt, trägt die Beschichtung 34, die auf diesen Flächen eine Stärke von 1,5 mm und innerhalb der Befestigungsbohrung 28 eine Stärke von 2,5 mm hat.

Figur 6 zeigt ein System , wobei der innere Rand der Befestigungsbohrung 28 des Werkzeugs 20 eine Beschichtung 34 trägt, während die sich auf beiden Seiten des Werkzeugs 20 daran anschließenden Flächen keine Beschichtung tragen. Stattdessen tragen die Spannflächen 30, 32 des Spannflansches 16 und Spannmutter 24 eine Beschichtung 34. Der über diese Beschichtung vorstehende Bereich, der Kragen 26, trägt keine Beschichtung.

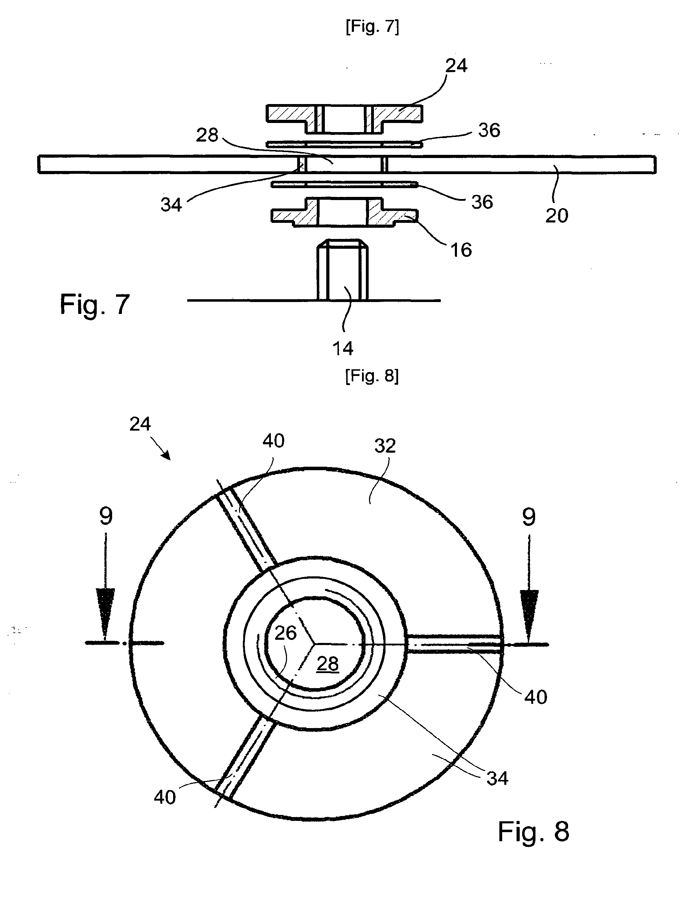

Figur 7 zeigt ein System, bei dem ebenso wie bei dem vorherigen System das Werkzeug 20 nur am inneren Rand der Befestigungsbohrung 28 die Beschichtung 34 trägt. Der Spannflansch 16 und die Spannmutter24 tragen jedoch keine Beschichtung. Stattdessen sind zwei Scheiben 36 aus dem elastischen Material vorgesehen, die auf die Spannflächen 30, 32 des Spannflansches 16 und der Spannmutter 24 aufgelegt werden. Der Innen- und der Außendurchmesser der Scheiben 36 stimmt mit dem der Spannflächen 30, 32 überein. Auch bei diesem Ausführungsbeispiel besteht daher kein unmittelbarer Kontakt zwischen dem ein- gespannten Werkzeug 20 und der Antriebsspindel 14, dem Spannflansch 16 und der Spannmutter 24. Der Kontakt zwischen diesen Bauteilen erfolgt immer über die Beschichtung 34 bzw. die Scheiben 36 aus elastischem Material.

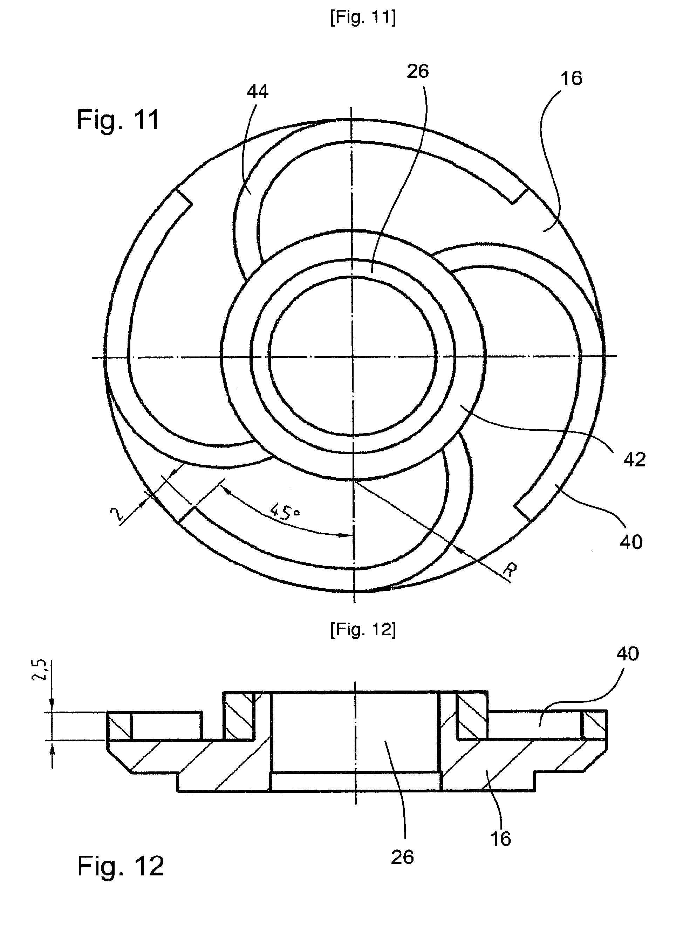

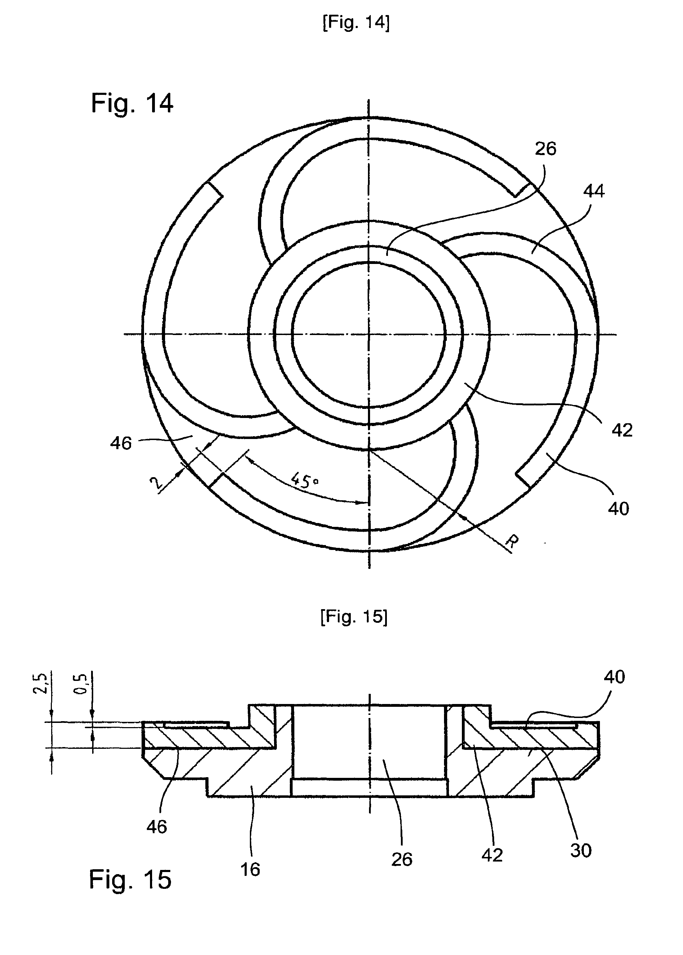

Die Figuren 8 bis 16 zeigen Ausführungsbeispiele, bei denen die Spannfläche 30 des Spannflansches 16 und die Spannfläche 32 der Spannmutter 24 die Beschichtung 34 tragen. Der Spannflansch 16 und die Spannmutter 24 haben wiederum einen Kragen 26, um dessen Umfang die Beschichtung 34 hochgezogen ist. Das Werkzeug 20 hat weder in der Nabenbohrung 28 noch in den die Nabenbohrung 28 umgebenden Bereichen eine Beschichtung.

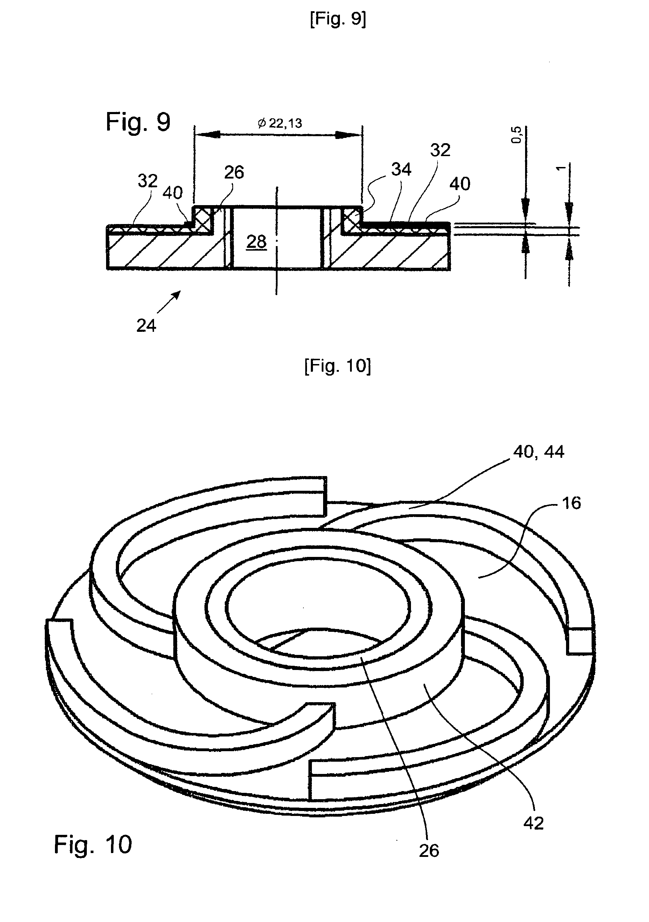

Die Figuren 8 und 9 zeigen mehr im Detail die Spannmutter 24, wobei Darstellungen des Spannflansches 16 abgesehen von dem etwas größeren Durchmesser und dem nicht vorhandenen Gewinde sowie der größeren Gesamthöhe der Rippen identisch wären. Man erkennt in Fig. 8 drei im Winkelabstand von 120° angeordnete, radiale Rippen 40 einer Breite von 1,5 mm. Die Höhe der Rippen 40 ist 0,5 mm (Fig. 9). Die Beschichtung 34 der Spannmutter 24 hat außerhalb der Rippen 40 eine Stärke von 1 mm. Die Beschichtung 34 des nicht gezeigten, dazugehörigen Spannflansches hat außerhalb der Rippen eine Stärke von 2 mm, wobei die Höhe der Rippen über der Beschichtung ebenfalls 0,5 mm beträgt.

Die Fig. 10, 11 und 12 zeigen ein Ausführungsbeispiel mit einzelnen spiralarmförmigen Rippen 40, die auf der Spannfläche 30 eines Spannflansches 16 aufgebracht sind. So wie in den vorausgehenden Beispielen hat der Spannflansch 16 einen Kragen 26, der auf seiner zylinderförmigen Außenseite eine Beschichtung 42 trägt. Von der Beschichtung 42 führen die Rippen 40 zunächst nahezu radial weg und nähern sich dann in einer Krümmung 44 dem äußeren Rand des Spannflansches 16, dem sie dann ein Stück folgen. Es sind vier spiralarmförmige Rippen 40 vorhanden, die innerhalb eines Winkelbereichs von 45° in der Krümmung 44 von innen nach außen verlaufen und dann in einem weiteren Winkelbereich von wiederum 45° dem Rand des Spannflansches 16 folgen. Die Rippen 40 haben eine Höhe von 2,5 mm und eine Breite von 2 mm. Die Rippen der nicht gezeigten, dazugehörigen Spannmutter haben eine Höhe von 1,5 mm und eine Breite von 2 mm.

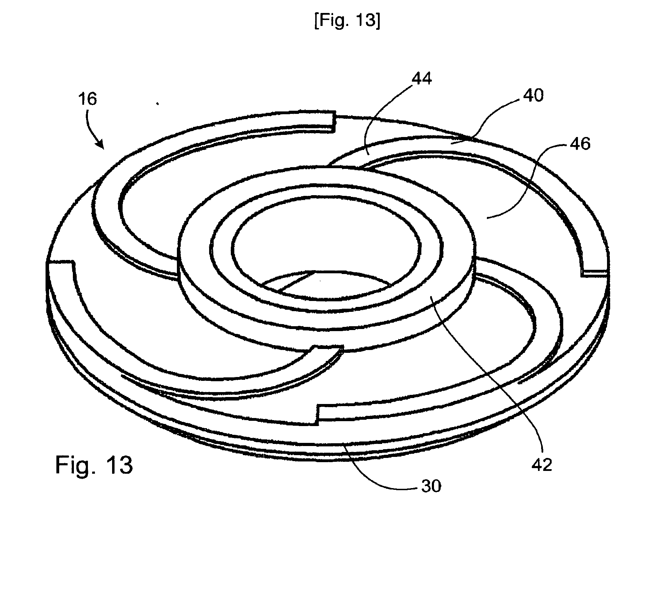

Die Fig. 13, 14 und 15 zeigen ein ähnliches Ausführungsbeispiel wie die Fig. 10, 11 und 12, wobei die Rippen 40 jedoch nicht unmittelbar auf dem Spannflansch 16 angebracht sind, sondern auf der Spannfläche 30 des Spannflansches 16 eine flächige Beschichtung 46 angebracht ist, von der die Rippen 40 abstehen. Die flächige Beschichtung 46 hat eine Stärke von 2 mm, und die Rippen 40 haben daher nur noch eine Höhe von 0,5 mm. Die flächige Beschichtung der dazugehörigen Spannmutter hat eine Stärke von 1 mm, wobei die Rippen ebenfalls eine Höhe von 0,5 mm über der Beschichtung haben.

Wie eingangs erwähnt, können die Spannmuttern auch als obere Spannflansche ausgebildet sein, die dann mit einer Mutter auf der Antriebsspindel gegen das Werkzeug und den unteren Spannflansch gespannt werden.

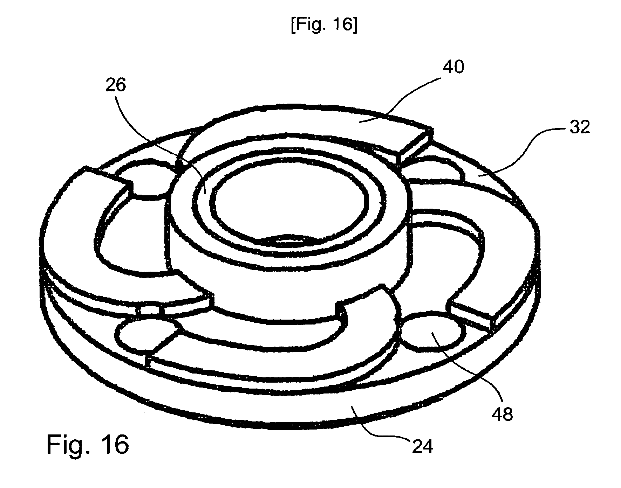

Fig. 16 zeigt eine Spannmutter 24 mit besonders breiten Rippen 40 und, wie bei dem Ausführungsbeispiel der Fig. 10 bis 12, ohne flächige Beschichtung. Die Breite der Rippen 40 beträgt 0,5 mm. Die Enden der spiralarmförmigen Rippen 40 sind wegen der Spannlöcher 48 etwas gekürzt.

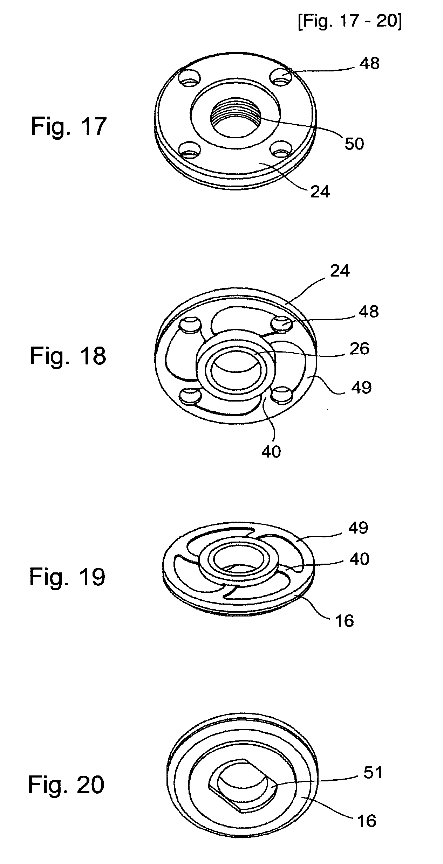

Fig. 17 und 18 zeigen schräg von oben bzw. schräg von unten eine Spannmutter 24 mit vier spiralarmförmigen Rippen 40, die in eine auf dem Umfang der Spannmutter 24 verlaufende Umfangsrippe 49 münden. Die Beschichtung ist auch an der

Außenseite des Kragens 26 hochgezogen. Wie Fig. 17 zeigt, hat die Oberseite der Spannmutter 24 die übliche Form mit vier Spannlöchern 48 und einem Innengewinde 50.

Die Fig. 19 und 20 zeigen ebenfalls in einer Ansicht schräg von oben bzw. schräg von unten einen Spannflansch 16, der zu der Spannmutter 24 der Fig. 17 und 18 passend ausgebildet ist. Auf der Oberseite des Spannflansches 16 befindet sich eine Beschichtung in Form von vier spiralarmförmigen Rippen 40 und einer Umfangsrippe 49, wobei die Beschichtung auch an der Außenseite des Kragens 26 hochgezogen ist. Wie Fig. 20 erkennen lässt, hat die Unterseite des Spannflansches 16 das übliche Aussehen mit einer abgeflachten Schulterbohrung 51, mit der der Spannflansch 16 drehfest auf einer üblichen Antriebsspindel angeordnet werden kann.

Die Rippen 40 werden beim Aufdrehen der Spannmutter 24 auf die Antriebsspindel 14 zwar weitgehend zusammengedrückt, so dass auch die Bereiche zwischen den Rippen 40 Kontakt mit dem Rand der Nabenbohrung des Werkzeugs 20 haben können. Der Anpressdruck ist jedoch im Bereich der Rippen 40 höher, so dass die Spannkräfte in erster Linie im Bereich der Rippen 40 wirksam sind. Die Vibrationen werden dadurch weniger von dem Werkzeug 20 auf die Antriebsspindel 14 und die Antriebseinheit 10 übertragen als bei gleichmäßig auf den Spannflächen 30, 32 wirkenden Spannkräften.

### Liste der Bezugszeichen

- 10: Antriebseinheit
- 12: Schutzhaube
- 14: Antriebsspindel
- 16: Spannflansch
- 18: Handgriff
- 20: Werkzeug
- 22: Außengewinde
- 24: Spannmutter
- 26: Kragen
- 28: Nabenbohrung
- 30: Spannfläche (Spannflansch)
- 32: Spannfläche (Spannmutter)
- 33: oberer Spannflansch
- 34: Beschichtung
- 40: Erhebungen, Rippen
- 42: Beschichtung (Kragen)
- 44: Krümmung
- 46: flächige Beschichtung
- 48: Spannlöcher
- 49: Umfangsrippe
- 50: Innengewinde
- 51: Schulterbohrung

## Patentansprüche

1. Vorrichtung zum Trennen und Schleifen mit einer Antriebseinheit (10), mit einer Antriebsspindel (14), die eine Achse aufweist, und mit Spannelementen (16, 24) zum Spannen einer Schleif-, Schrupp- oder Trennscheibe (20) auf die Antriebsspindel (14), wobei die Spannelemente (16, 24) Spannflächen (30, 32) und eine zentrale Bohrung aufweisen, mit der sie auf der Antriebsspindel (14) sitzen, wobei die Bohrung auf der Seite der Spannflächen (30, 32) einen Kragen (26) mit einer zylindrischen Außenseite aufweist, auf dem die Schleif-, Schrupp- oder Trennscheibe (20) mit einer Nabenbohrung (28) sitzt, und wobei zwischen der Schleif-, Schrupp- oder Trennscheibe (20) und den Spannelementen (16, 24) vibrationsdämpfende Mittel in Form einer Beschichtung (34) aus elastischem Material auf den Spannelementen (16, 24) vorgesehen sind, **dadurch gekennzeichnet, dass** die Beschichtung (34) aus elastischem Material um die zylindrische Außenseite des Kragens (26) hochgezogen ist.

2. Vorrichtung nach Anspruch 1, wobei die Beschichtung (34) auf den normal zur Achse der Antriebsspindel (14) liegenden Flächen Erhebungen (40) aufweist.

3. Vorrichtung nach Anspruch 2, wobei die Spannelemente ein Spannflansch (34) und eine Spannmutter (24) sind und die Beschichtung (34) flächenhaft auf den Spannflächen (30, 32) des Spannflansches (16) oder der Spannmutter (24) vorhanden ist und die Erhebungen (40) von einer flächigen Beschichtung (46) abstehen.

4. Vorrichtung nach Anspruch 2, wobei die Spannmittel einen Spannflansch (34) und eine Spannmutter (24) sind und die Erhebungen (40) als diskrete Beschichtungen auf den Spannflächen (30, 32) des Spannflansches (16) oder der Spannmutter (24) vorhanden sind.

5. Spannvorrichtung zum Aufspannen einer Schleif-, Schrupp- oder Trennscheibe auf eine Antriebsspindel (14), die eine Achse aufweist, mit zwei Spannelementen (16, 24), die Spannflächen (30, 32) und eine zentrale Bohrung aufweisen, mit der sie auf der Antriebsspindel (14) sitzen, wobei die Bohrung auf der Seite der Spannflächen (30, 32) einen Kragen (26) mit einer zylindrischen Außenseite aufweist, auf dem die Schleif-, Schrupp- oder Trennscheibe (20) mit einer Nabenbohrung (28) sitzt, und wobei zwischen der Schleif-, Schrupp- oder Trennscheibe (20) und den Spannelementen (16, 24) vibrationsdämpfende Mittel in Form einer Beschichtung (34) aus elastischem Material auf den Spannelementen (16, 24) vorgesehen sind, **dadurch gekennzeichnet, dass** die Beschichtung (34) aus elastischem Material um die zylindrische Außenseite des Kragens (26) hochgezogen ist.

6. Spannvorrichtung nach Anspruch 5, wobei die elastische Beschichtung (34) auf den normal zur Achse der Antriebsspindel (14) liegenden Flächen Erhebungen (40) aufweist.

7. Spannvorrichtung nach Anspruch 6, wobei die Erhebungen mindestens drei radial oder spiralarmförmig verlaufende Rippen (40) sind.

8. Vorrichtung nach Anspruch 1, wobei der Durchmesser des Kragens (26) mit der Beschichtung (34) 22,13 mm beträgt.

9. Spannvorrichtung nach Anspruch 5, wobei der Durchmesser des Kragens (26) mit der Beschichtung (34) 22,13 mm beträgt.

10. Vorrichtung nach einem der Ansprüche 2, 3 und 4, wobei das elastische Material Polyurethan mit einer Härte [Shore A] von 80 ± 5 ist.

11. Spannvorrichtung nach Anspruch 6 oder 7, wobei das elastische Material Polyurethan mit einer Härte [Shore A] von 80 ± 5 ist.

## Claims

1. Device for cutting and grinding with a drive unit (10), with a drive spindle (14) having an axis, and with clamping means (16, 24) for clamping a grinding, roughing or cutting disk (20) onto the drive spindle (14), whereby the clamping means (16, 24) comprise clamping surfaces (30, 32) and a central fixing hole, with which they sit on the drive spindle (14), whereby the fixing hole has, on the side of the clamping surfaces (30, 32), a collar (26) with a cylindrical periphery, on which the grinding, roughing or cutting disk (20) sits with a hub bore hole (28), and whereby vibration-damping means in form of a coating (34) of elastic material are provided on the clamping means (16, 24) between the grinding, roughing or cutting disk (20) and the clamping means (16, 24),
**characterized in that**
the coating (34) of elastic material is raised around the cylindrical periphery of the collar (26).

2. Device according to claim 1, wherein the coating (34) has raised sections (40) on the surfaces lying normal to the axis of the drive spindle (14).

3. Device according to claim 2, wherein the clamping means are a clamping flange (16) and a clamping nut (24) and the coating (34) is present in laminar form on the clamping surfaces (30, 32) of the clamping flange (16) or the clamping nut (24) and the raised sections (40) project from a flat coating (46).

4. Device according to claim 2, wherein the clamping means are a clamping flange (16) and a clamping nut (24) and the raised sections (40) are present as discrete coatings on the clamping surfaces (30, 32) of the clamping flange (16) or of the clamping nut (24).

5. Clamping device for clamping a grinding, roughing or cutting disk (20) onto a drive spindle (14) having an axis, comprising two clamping elements (16, 24) having clamping surfaces (30, 32) and a central fixing hole, with which they sit on the driving spindle (14), whereby the fixing hole has, on the side of the clamping surfaces (30, 32), a collar (26) with a cylindrical periphery, on which the grinding, roughing or cutting disk (20) sits with a hub bore hole (28), and whereby vibration-damping means in form of a coating (34) of elastic material are provided on the clamping means (16, 24) between the grinding, roughing or cutting disk (20) and the clamping means (16, 24),
**characterized in that**
the coating (34) of elastic material is raised around the cylindrical periphery of the collar (26).

6. Clamping device according to claim 5, wherein the coating (34) has raised sections (40) on the surfaces lying normal to the axis of the drive spindle (14).

7. Clamping device according to claim 6, wherein the raised sections are at least three ribs (40) running radially or in the form of spiral arms.

8. Device according to claim 1, wherein the diameter of the collar (26) with the coating (34) is 22,13 mm.

9. Clamping device according to claim 7, wherein the diameter of the collar (26) with the coating (34) is 22,13 mm.

10. Device according to any one of claims 2, 3 and 4, wherein the elastic material is polyurethane having a hardness [Shore A] of 80 ±5.

11. Clamping device according to any one of claims 6 or 7, wherein the elastic material is polyurethane having a hardness [Shore A] of 80 ±5.

## Revendications

1. Dispositif pour opérations de coupe et de meulage comportant une unité d'entraînement (10), un arbre d'entraînement (14) ayant un axe, et des moyens de serrage (16, 24) pour serrer un disque de meulage, de dégrossissage ou de coupe (20) sur l'arbre d'entraînement (14), les moyens de serrage (16, 24) comprenant des surfaces de serrage (30, 32) et un trou de fixation central, par lesquels ils reposent sur l'arbre d'entraînement (14), le trou de fixation ayant, sur le côté des surfaces de serrage (30, 32), un collier (26) à périphérie cylindrique, sur lequel repose le disque de meulage, de dégrossissage ou de coupe (20) avec un trou d'alésage central (28), et des moyens d'amortissement de vibration sous forme de revêtement (34) de matériau élastique étant fournis sur les moyens de serrage (16, 24) entre le disque de meulage, de dégrossissage ou de coupe (20) et les moyens de serrage (16, 24),
**caractérisé en ce que**
le revêtement (34) de matériau élastique est surélevé autour de la périphérique cylindrique du collier (26).

2. Dispositif selon la revendication 1, dans lequel le revêtement (34) comporte des sections surélevées (40) sur les surfaces reposant perpendiculairement à l'axe de l'arbre d'entraînement (14).

3. Dispositif selon la revendication 2, dans lequel les moyens de serrage sont une bride de serrage (16) et un écrou de serrage (24) et le revêtement (34) est présent sous forme feuilletée sur les surfaces de serrage (30, 32) de la bride de serrage (16) ou de l'écrou de serrage (24) et les sections surélevées (40) font saillie depuis un revêtement plat (46).

4. Dispositif selon la revendication 2, dans lequel les moyens de serrage consistent en une bride de serrage (16) et un écrou de serrage (24) et les sections surélevées (40) sont présentes sous forme de revêtements discrets sur les surfaces de serrage (30, 32) de la bride de serrage (16) ou de l'écrou de serrage (24).

5. Dispositif de serrage pour serrer un disque de meulage, de dégrossissage ou de coupe (20) sur un arbre d'entraînement (14) ayant un axe, comprenant deux éléments de serrage (16, 24) comprenant des surfaces de serrage (30, 32) et un trou de fixation central, par lesquels ils reposent sur l'arbre d'entraînement (14), le trou de fixation ayant, sur le côté des surfaces de serrage (30, 32), un collier (26) à périphérie cylindrique, sur lequel repose le disque de meulage, de dégrossissage ou de coupe (20) avec un trou d'alésage central (28), et des moyens d'amortissement de vibration sous forme de revêtement (34) de matériau élastique étant fournis sur les moyens de serrage (16, 24) entre le disque de meulage, de dégrossissage ou de coupe (20) et les moyens de serrage (16, 24),
**caractérisé en ce que**
le revêtement (34) de matériau élastique est surélevé autour de la périphérique cylindrique du collier (26).

6. Dispositif de serrage selon la revendication 5, dans lequel le revêtement (34) comporte des sections surélevées (40) sur les surfaces reposant perpendiculairement à l'axe de l'arbre d'entraînement (14).

7. Dispositif de serrage selon la revendication 6, dans lequel les sections surélevées consistent en au moins trois nervures (40) s'étendant radialement ou sous forme de bras spiraux.

8. Dispositif selon la revendication 1, dans lequel le diamètre du collier (26) avec le revêtement (34) est de 22,13 mm.

9. Dispositif de serrage selon la revendication 7, dans lequel le diamètre du collier (26) avec le revêtement (34) est de 22,13 mm.

10. Dispositif selon l'une quelconque des revendications 2, 3 et 4, dans lequel le matériau élastique est un polyuréthane d'une dureté [Shore A] de 80 ±5.

11. Dispositif de serrage selon l'une quelconque des revendications 6 ou 7, dans lequel le matériau élastique est un polyuréthane d'une dureté [Shore A] de 80 ±5.
